Europäisches Patentamt

European Patent Office

Office européen des brevets

(11) Publication number:

0 226 392

A2

# EUROPEAN PATENT APPLICATION

(21) Application number: 86309425.6

(51) Int. Cl.4: G06F 3/023

(22) Date of filing: 03.12.86

(30) Priority: 04.12.85 US 805181
21.11.86 US 930281

(43) Date of publication of application:
24.06.87 Bulletin 87/26

(84) Designated Contracting States:
AT BE CH DE ES FR GB IT LI NL SE

(71) Applicant: **Meadow, Henry C.**
**Box 80**
**Winston New Mexico 87943(US)**
Applicant: **Schleifer, Arthur Jr.**
**40 The Ledges Road**
**Newton Center Massachusetts 02159(US)**

(72) Inventor: **Meadow, Henry C.**
**Box 80**
**Winston New Mexico 87943(US)**
Inventor: **Schleifer, Arthur Jr.**
**40 The Ledges Road**
**Newton Center Massachusetts 02159(US)**

(74) Representative: **Deans, Michael John Percy et al**
**Lloyd Wise, Tregear & CO. Norman House**
**105-109 Strand**
**London WC2R OAE(GB)**

(54) **Display key and keyboard.**

(57) Display elements are associated with the keys of the keyboard for displaying information. Display commands indicative of information to be displayed on the display elements are sent to the keys, each such command identifying which of the keys are intended recipients of the command. Associated with each key is a receiving means which determines whether such key is an intended recipient of a particular command. If so, the information is displayed on the associated display element.

FIG 1

## DISPLAY KEY AND KEYBOARD

The invention relates to keyboards, to apparatus for displaying information on a keyboard and to keys for use in key boards.

In some keyboards the keys can both accept user entered information and display information back to the user. A character, for example the letter "A", can be displayed at each key to show what pressing that key will mean. The various characters being displayed at the keys, and hence the meanings of different keys, can be changed (e.g., from letters to numbers) by pressing a special key or a particular sequence of keys, or by instruction from a processor.

The actual display of a particular character on a given key is typically accomplished by sending a code representing that character over a dedicated wire connected to only that key.

Typically a liquid crystal or light emitting display is mounted on the top of the key.

Alternatively, a display mounted beneath the key is visible through a transparent top of the key. Other kinds of keys have translucent tops with liquid crystal, light emitting, or optical fibre displays mounted within the key in contact with the underside of the translucent top.

Such keys and keyboards have a variety of uses, for example in typewriters, calculators, word processors, control panels, or computer terminals.

We describe herein an arrangement in which display commands are sent to the keys of a keyboard, each command identifying which of the keys are intended recipients of the command. Each key receives each command, determines whether it is an intended recipient of the command, and if so displays information that is indicated by the command. The display commands are thus versatile and can be sent economically.

In accordance with one aspects of the present invention, we provide apparatus for displaying information on a keyboard comprising: display elements associated with keys of said keyboard for displaying information, transmitting means for sending display commands to said keys, said commands being indicative of information to be displayed on said display elements, each said command identifying which of said keys are intended recipients of said command, and receiving means associated with each said key for receiving each said command, for determining whether said key is an intended recipient of said command, and if so for displaying said information on the associated said display elements.

Preferred embodiments include one or more of the following features: The communication medium for the commands is a wire bus or at least one wire or at least one optical fibre element shared in common by the transmitting means (which sends the commands) and by the receivers associated with all of the keys, reducing the cost of the transmission system. Each key is assigned a unique address and in some embodiments each command includes an address indicating which key is the intended recipient. In other embodiments, a command includes a broadcast symbol or a group symbol indicating respectively that all or a group of fewer than all of the keys are intended recipients, thus reducing the number of commands required to be sent. In some embodiments, each command includes a display image code from an available set of display image codes and each intended recipient key displays the corresponding display image, thus providing direct control over the displays. In other embodiments, each key stores a set of selected display images from an available set of display images and the commands identify which of the images should be displayed at a given time, thus reducing the amount of information that must be sent to the keys. The display images stored in the key may be changed in accordance with information provided in the display commands. The command includes instructions indicative of the format of the information to be displayed. The information for display includes alphanumeric characters.

The transmitting means and the receiver associated with each key may be linked by a communications medium that does not include an uninterrupted hard physical connection between the transmitting means and the receiver. Display commands can thus be sent efficiently over some distance, and the operation of the keys is not affected by wire connections.

Thus, in a second and alternative aspect of this invention, we provide apparatus for displaying information on a keyboard comprising: display elements associated with keys of said keyboard for displaying information, transmitting means for sending display commands to said keys, said commands being indicative of information to be displayed on said display elements, and a receiver associated with each said key for receiving each said command, said transmitting means and each said receiver being linked by a communications medium that does not include an uninterrupted hard physical connection between said transmitting means and said receiver.

In preferred embodiments, the commands are sent by modulating either an RF carrier, light, or acoustic waves.

The invention is also directed to the key device itself for inclusion in such a keyboard.

We provide, in a third alternative aspect of this invention, a key device for inclusion in a keyboard of the kind in which the keys display information based on commands sent from a transmitting means, each said command identifying which keys it is intended for, said key comprising means for receiving each said command, and means for determining whether said key is an intended recipient of said commands.

In a fourth alternative aspect of this invention, we provide a key device for inclusion in a keyboard of the kind in which the keys display information based on commands sent from a transmitting means, said key comprising: a receiver coupled to a communications medium on which said commands are carried, said medium not including an uninterrupted hard physical connection between said transmitting and receiving means.

The keyboard may include a key that provides an electrical signal in response to a user's contact with the key, the key being adapted for use with a display device that generates a visible image; the key has a translucent surface that is visible to the user and is spaced apart from the display device, and a lens for focusing the image on the translucent surface for viewing.

There is provided, in a fifth alternative aspect of this invention, a key of the kind that provides an electrical signal in response to a user's contact with said key, said key being adapted for use with a display device that generates a visible image, said key comprising a translucent surface that is visible to said user and is spaced apart from said display device, and a lens for focusing said image on said translucent surface for viewing.

Preferred embodiments include the following features: The key has a three-dimensional key body mounted for substantially vertical movement in response to the user's contact, the display device is stationary relative to the key body, the key body includes a channel leading from the display to the translucent surface, and the lens is disposed in the channel. The key body has a top touch surface for contact by the user, and the display device is positioned beneath the bottom of the key. The display device is of the electro-optical type arranged for displaying characters.

The keyboard may have a key having a touch surface for activating the key, and a display surface oriented at an angle to the touch surface for displaying a visible image generated by an electro-optical display device.

Accordingly, in a further alternative aspect thereof, this invention provides a key of the kind that provides an electrical signal in response to a user's contact with said key, said key being adapted for use with an electro-optical display device that generates a visible image, said key comprising: a touch surface for activating said key, and a display surface oriented at an angle to said touch surface for displaying said image.

A keyboard may have a plurality of such keys.

Thus, in a still further alternative aspect of the invention, we provide a keyboard comprising a plurality of keys each of the kind that provides an electrical signal in response to a user's contact with said key, each said key being adapted for use with an associated display device that generates a visible image, each said key comprising: a translucent surface that is visible to said user and is spaced apart from said display device, and a lens for focusing said image on said translucent surface for viewing.

Also, in a yet further aspect of this invention, we provide a keyboard comprising a plurality of keys each of the kind that provides an electrical signal in response to a user's contact with said key, each said key being adapted for use with an associated electro-optical display device that generates a visible image, each said key comprising a touch surface for activating said key, and a display surface oriented at an angle to said touch surface for displaying said image.

Preferred embodiments include the following features: The keyboard has keys that are arranged in an array and the display devices are arranged in a corresponding array beneath the array of keys. The visible image can be altered in response to user's contact with the keys.

We shall explain in detail below how information can be displayed on the keys without having to mount the display devices in the keys, and without requiring wire or optical fibre physical connection between the keys and the display devices or between the keys and logic units controlling the display devices. Angling the display surface relative to the touch surface enables the user to see the displayed image easily, even while operating the keys. The keyboard can be a conventional typewriter keyboard with substantially vertically moving independent key bodies. The keys and keyboards are easy and inexpensive to fabricate.

Other advantages and features of our apparatus will become apparent from the following description of the preferred embodiment.

We first briefly describe the drawings.

Fig. 1 is a isometric view of a console showing representative keys of the keyboard.

Fig. 2 is an isometric view of a representative set of keys.

Fig. 3 is a block diagram of the keyboard circuitry.

Fig. 4 shows layouts of display commands.

Fig. 5 is a block diagram of the key circuitry.

Fig. 6 is a feedback diagram.

Figs. 7A, 7B, 7C show a sequence of menu type displays.

Fig. 8 shows a block diagram of an alternative display command transmission scheme.

Fig. 9 is an isometric view of a representative set of keys.

Fig. 10 is a side view of a key.

Fig. 11 shows an alternative key arrangement.

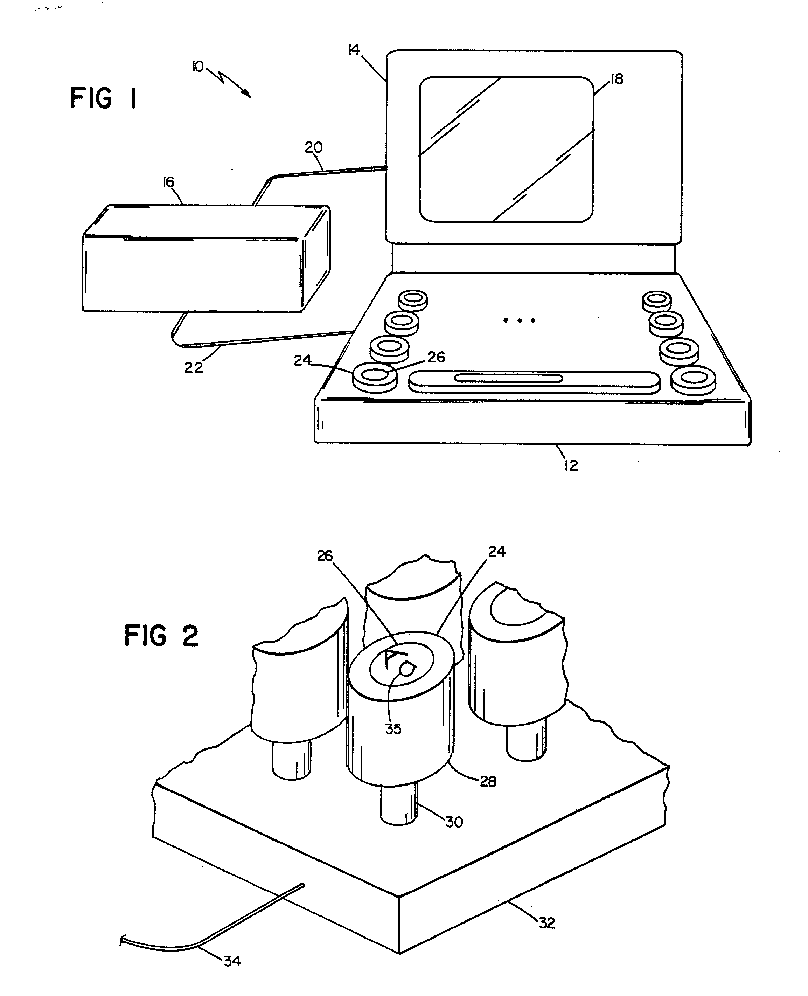

Referring to Fig. 1, console 10 includes a keyboard unit 12, a video monitor 14, and a central processing unit 16. Video monitor 14 includes a cathode ray tube (CRT) 18 and decoding and scanning circuitry (not shown) for decoding and displaying information on the CRT. The information to be displayed is received in coded form (e.g., in accordance with ASCII or any other code) over a line 20 that connects the monitor to the central unit. The central unit includes a microprocessor (not shown) and storage (not shown) which holds systems software, applications software, and data to enable the computer to perform a variety of tasks, including displaying information on the monitor, and communicating with the keyboard. Central unit 16 is connected by a link 22 to the keyboard both to receive keypress information from and to send display information to the keyboard. Keyboard 12 has an array of keys 24. Each key is either of the momentary contact type or the press on, press off type and has a display surface 26 bearing an electro-optical display (e.g., an LED or LCD matrix) exposed on its upper face (the face which the user's finger touches) for viewing by the user.

Referring to Fig. 2, each key 24 includes a key head 28 and a linkage 30 which connects the key head to a conventional key encoding matrix 32. Matrix 32 detects the pressing of a key and converts it to a binary codeword which is delivered over a line 34. The codeword uniquely identifies which key has been pressed. Display 26 is capable of displaying one or more characters 35 of information organized on one or more lines (only two characters on two lines are shown in Fig. 2).

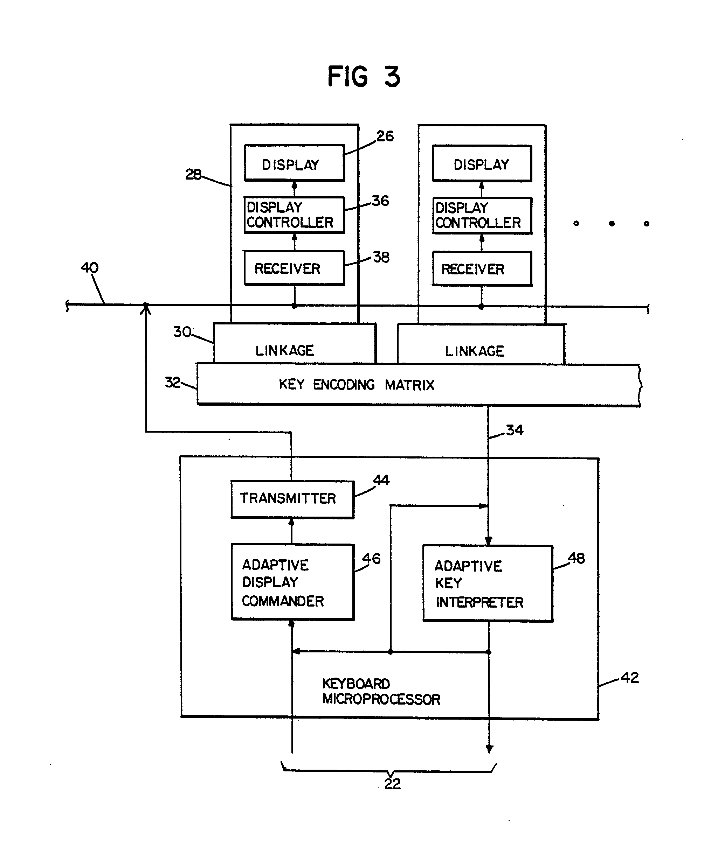

Referring to Fig. 3, each key head 28 contains, in addition to display 26, a display controller 36 and a receiver 38, incorporated in appropriate integrated circuit chips that are powered either by a wire connection to each key or by a local power source such as a battery or photo-electric cell. In this configuration, the receivers of all keys are connected to a single key display bus 40 which carries display commands dictating what characters are to be displayed on the various keys at a given time. Bus 40 is connected to a keyboard microprocessor 42 which is mounted within the keyboard housing. Microprocessor 42 includes a transmitter 44 which drives bus 40 with an appropriate sequence of instructions for the information that is to be displayed on the keys. Microprocessor 42 is also programmed to implement an adaptive display commander 46, and an adaptive key interpreter 48. Commander 46 and interpreter 48 are connected via link 22 to central processor unit 16 (Fig. 1). Adaptive key interpreter 48 receives binary codewords via line 34 from key encoding matrix 32, interprets their meaning, and passes that information to link 22. In the simplest case, interpreter 48 merely passes the binary codewords directly onto line 22 for interpretation at the central unit 16 (Fig. 1).

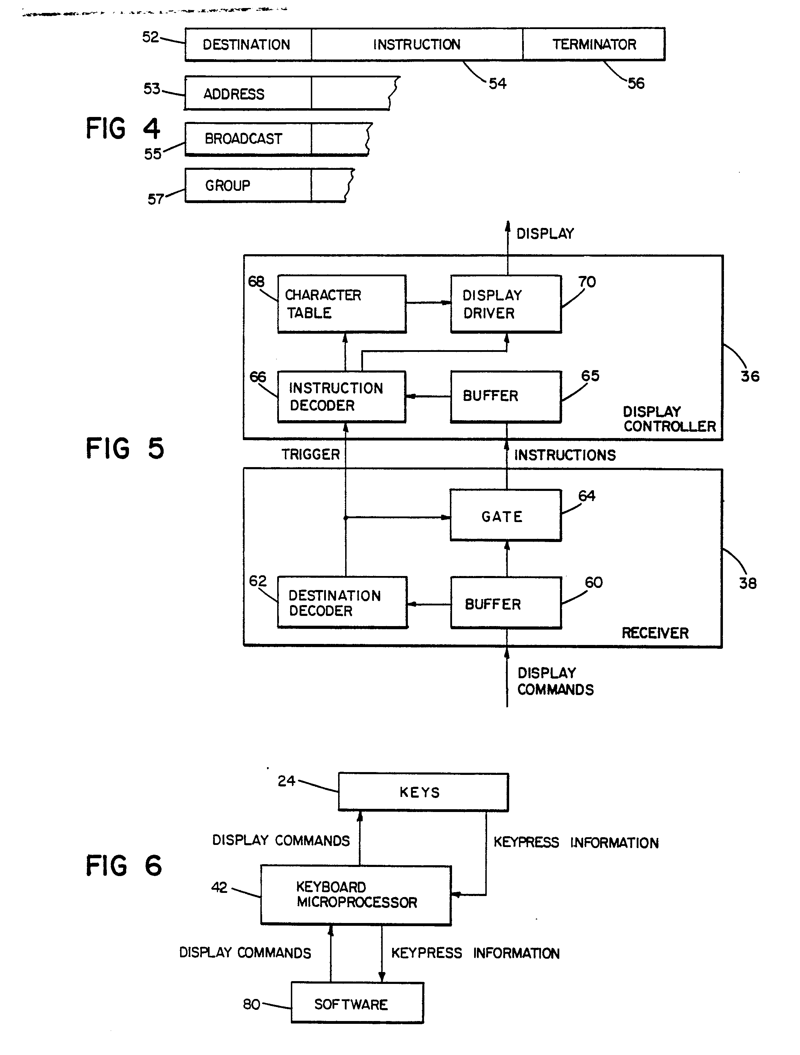

Referring to Fig. 4, each display command carried on bus 40 includes a destination field 52, an instruction field 54, and a terminator field 56. The destination field 52 indicates which keys are intended to receive and act on the instruction. For this purpose, each key is assigned a unique address. When the destination field contains that address 53, the display of that key is affected. The destination field may also contain a broadcast symbol 55 or a group symbol 57 indicating respectively that all keys or only a certain group of keys are to respond.

Referring to Fig. 5, receiver 38 includes a buffer 60 that temporarily holds each display command appearing on bus 40. A destination decoder 62 analyses the destination field of the display command to determine whether the instruction is intended for its key. It does this by determining whether the destination field value is the address of the key or is a value specifying that all keys or a group of keys (of which this key is one) are to respond. If, but only if, this key is being addressed, decoder 62 sends a trigger signal both to a gate 64 (which then passes the instruction field to a buffer 65 in display controller 36), and to an instruction decoder 66 in controller 36. Decoder 66 analyses the instruction to determine what action is required. The instruction field 54 contains a coded instruction that can require a variety of actions, including the following examples:

(1) display a specific character (indicated by an ASCII code imbedded in the instruction) at a specific location on the display.

(2) switch to displaying a specified one of several preassigned characters. For example, a given key may have been preassigned to three alternative characters, lower case a, upper case A, and ampersand, and the instruction may simply tell the key to display its second preassigned character (i.e., the upper case A).

(3) cause the present display to flash on and off.

(4) cause a specific character to be constructed by illuminating specific elements of the display matrix. The bit pattern needed to display a given character is stored in a character look-up table 68, whose bit pattern output is connected to a display driver 70. The contents of look-up table 68 could be either permanently fixed, or changed based on information provided in instruction field 54. Display driver 70 also receives commands from instruction decoder 66 concerning the positions of the characters, the flash or non-flash status, and other parameters. Display driver 70 then determines the on or off status of each element of display 26 (e.g., each dot in a dot matrix LED, or each segment in a multiple segment LCD) and drives display 26 accordingly.

Referring to Fig. 6, the display commands sent to keys 24 are determined adaptively by the keyboard microprocessor 42 based on feedback of keypress information from the keys and on feedback from software 80 (part of central unit 16--Fig. 1) to which the keypress information is also sent.

The combination of feedback from the keys and from the microprocessor permits a wide range of approaches to controlling the key displays.

For example, the information displayed on the keys can be controlled by pressing either special keys that are temporarily or permanently dedicated to that function, or pressing a special sequence of keys. For example, the key displays can be set up to show all of the lower case characters corresponding to a conventional typewriter. Whenever the shift key is pressed, all displays can automatically switch to displaying the upper case letters and characters. A special key or switch or command given to a word-processing program could be provided to permit changing the order of characters on the keys from a conventional typewriter array to some other array, e.g., a different alphabet, or a different ordering of the letters on the keys.

Feedback from software 80 could be used to mask or edit information being entered at the keyboard. For example, if software 80 is an editor of the kind that corrects spelling errors or aids writing computer programs by checking the syntax of entered program instructions, when an invalid character is entered one, some, or all the key displays can be made to flash on and off to indicate the error.

As another example, an applications program that is menu driven could be arranged to display the possible menu selections on the keys themselves.

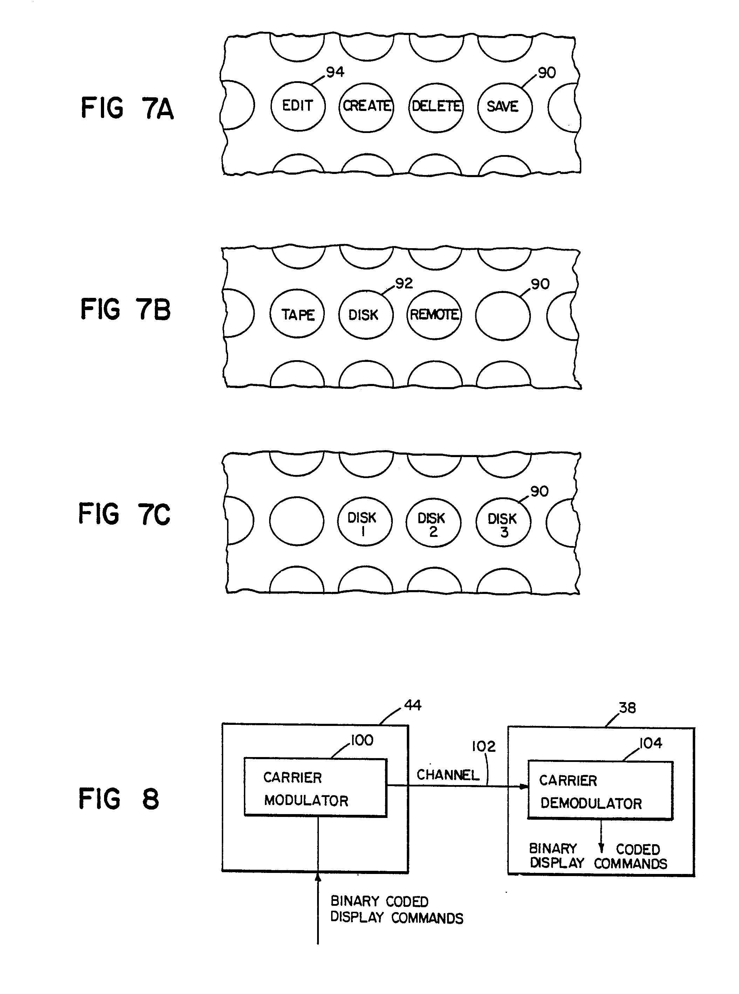

For example, referring to Figs. 7A, 7B, 7C, the initial menu of a word processing program may offer four options which are respectively displayed on four separate keys, as commanded by software 80 (Fig. 6). If the user presses key 90 (labeled SAVE), indicating a desire to save a document, the key displays are changed to show the three options of saving on tape, on disk, or remotely (Fig. 7B). This occurs by a combined feedback of the pressing of key 90 and the response of software 80 to that keypress. Now if key 92 (labeled DISK) is pressed, the next menu is a choice of disks (Fig. 7C). If the user presses key 90, the document is stored on disk 3. In that case key 90 of course has an entirely different function that it had in Fig. 7A. Next the key displays are caused by software 80 to revert to Fig. 7A. Now suppose the user wishes to edit a document and therefor presses key 94 (Fig. 7A). The software 80 may then display on CRT 18 the statement "Enter the document number" and at the same time cause the key displays to switch to a conventional typewriter keyboard for entry of the document number.

Thus at different times a key can be used either to trigger an action, or to enter data, or to cause the key displays to change, or some combination of these purposes. The key display can likewise be used to provide information, to indicate the function a key will perform, or to indicate the way the key will be interpreted when loading data.

Other embodiments are feasible.

For example, referring to Fig. 8, transmitter 44 can include a carrier modulator that modulates a carrier - (e.g., an RF carrier, a light beam, or sound waves) in accordance with the binary coded display commands received from commander 46, and delivers it broadcast or over a channel 102 (e.g., an optical fiber) to each key. The receiver 38 of each key would include a carrier demodulator which would recover the binary coded display commands from the carrier.

Where a hard physical connection is used between the transmitter and receivers it could be one or more separate wires or one or more separate optical fibers.

5

The keys could be part of a pocket calculator, typewriter, or word processor, or a control or instrument panel. The keyboard microprocessor could be located outside the keyboard housing and both the keypress information and the display commands could be transmitted by RF, light, or sound signals, or a combination thereof, obviating the need for any wire connection between the keyboard and the central unit.

The display element and receiver and other circuitry for each key could be incorporated in a key cap that could be attached to a conventional key, in which case the transmitter equipment might be housed separately from the keyboard.

The invention could be used to eliminate the need for a separate numeric keypad on a keyboard. The existing key meanings (e.g., the alphabet) could be shifted to numerals on some portion of the keyboard in response to program instructions or particular keystrokes. The numeric keypad could be configured telephone style or IBM PC-style (see below) or otherwise at the user's choice.

```
        1 2 3                    7 8 9

        4 5 6                    4 5 6

        7 8 9                    1 2 3

          0                        0

      (Telephone)                (IBM)
```

Similarly, a keyboard would not have to include separate dedicated function keys. Instead the usual letter keys could be temporarily reconfigured to serve as function keys, when needed.

The key displays could be arranged to use different visual modes to display different categories of characters. For example, keys intended to perform mathematical operations could have a white character on black field display mode while the rest of the keys could be displaying letters or numbers in a black on white mode. Then a key displaying an "X" to indicate multiplication would not be confused with a key displaying the letter "X".

The entire keyboard of a typewriter could be shifted from Roman characters to Greek characters to Japanese characters or to any other character set almost instantaneously be an appropriate instruction.

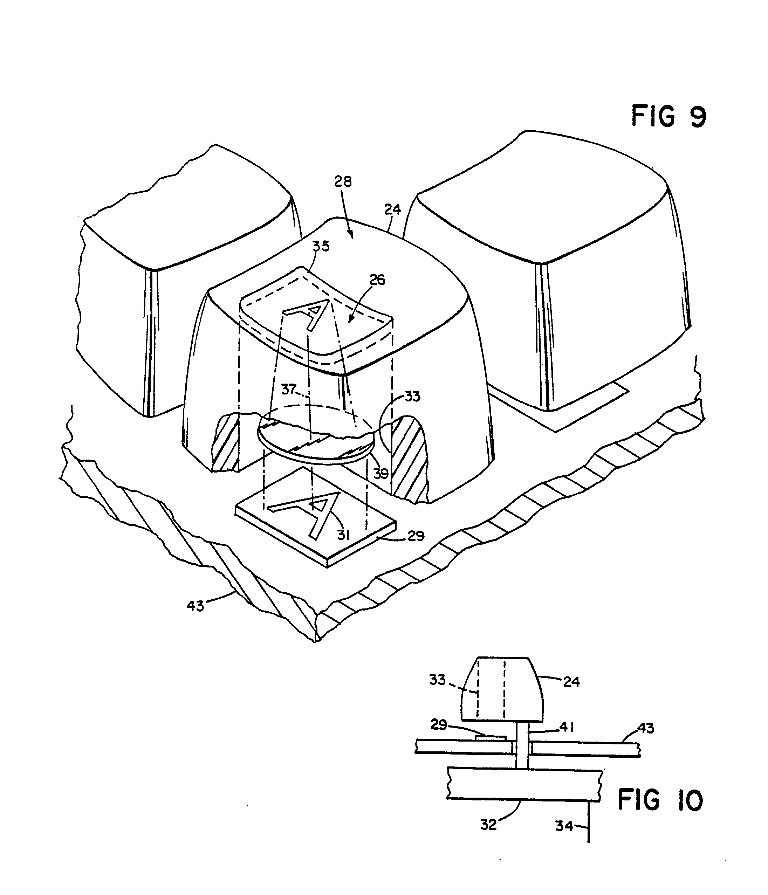

Referring to Fig. 9, in other embodiments, each key 24 includes a touch surface 28 which the user presses to activate the key. Display surface 26 also is situated on top of the key either as part of the touch surface 28 or immediately below it. Underlying the array of keys 24 is a corresponding array of electro-optical display elements 29 each capable of displaying a variety of one or more characters 31 organized on one or more lines (only one character on one line is shown in Fig. 9). Each element 29 lies below the display surface 26 of a corresponding key 24.

Each key is molded of opaque plastic and has an open channel 33 that extends vertically from the top through to the bottom and is aligned with the underlying display element 29. Channel 13 helps to confine light emitted from the display element 29 so that extraneous emitted light is not seen by the user. A screen 35 is attached into the top of channel 33. Screen 35 is transparent except that either its upper or lower surface is abraded to make it translucent thus forming display surface 26. Channel 33 provides a straight optical path 37 from display element 29 to the display surface of screen 35. A lens 39 placed in the optical path 37 projects and focuses the visible image of character 31 onto the display surface of screen 35 for viewing by the user.

Referring to Fig. 10, key 24 is mounted via a conventional post 41 on a conventional key encoding matrix 32. Post 41 passes through a hole in the display element array 43. Matrix 32 detects the pressing of a key and delivers a corresponding codeword (which uniquely identifies which key has been pressed) over a line 34. Matrix 32 also provides a mechanism for supporting and permitting substantially vertical movement of key 24. The mechanism includes a return spring and means (such as a detent) to provide a tactile feel.

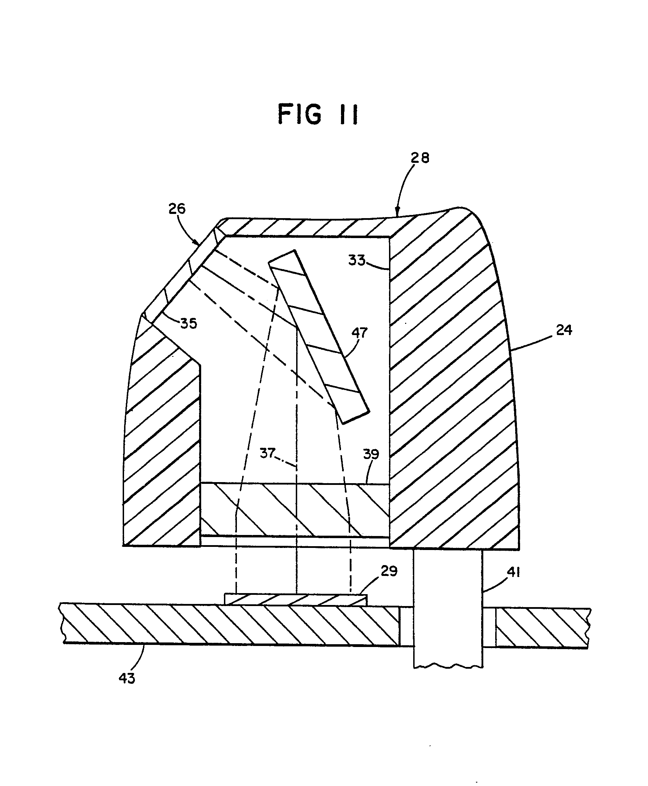

Referring to Fig. 11, in other embodiments display surface 26 can be placed at the front of key 24, oriented at an angle to touch surface 28 so that the displayed image is seen even when the key is being touched. To achieve this, a mirror 47, mounted within channel 33, reflects the image onto display surface 26.

# 0 226 392

## Claims

1. Apparatus for displaying information on a keyboard comprising
display elements associated with keys of said keyboard for displaying information,
transmitting means for sending display commands to said keys, said commands being indicative of information to be displayed on said display elements, each said command identifying which of said keys are intended recipients of said command, and
receiving means associated with each said key for receiving each said command, for determining whether said key is an intended recipient of said command, and if so for displaying said information on the associated said display elements.

2. The apparatus of claim 1 further comprising
a common communication medium between said transmitting means and the receiving means associated with all of said keys for carrying said commands simultaneously to all of said keys.

3. The apparatus of claim 2 wherein said medium comprises at least one wire.

4. The apparatus of claim 3 wherein said medium comprises a wire bus.

5. The apparatus of claim 1 wherein said medium comprises at least one optical fiber element.

6. Apparatus for displaying information on a keyboard comprising
display elements associated with keys of said keyboard for displaying information,
transmitting means for sending display commands to said keys, said commands being indicative of information to be displayed on said display elements, and
a receiver associated with each said key for receiving each said command,
said transmitting means and each said receiver being linked by a communications medium that does not include an uninterrupted hard physical connection between said transmitting means and said receiver.

7. The apparatus of claim 6 wherein said communications medium is shared in common by said transmitting means and said receivers of all said keys.

8. The apparatus of claim 2 or 6 wherein said medium comprises air.

9. The apparatus of claim 6 wherein said transmitting means sends said commands by modulating an RF carrier or light.

10. The apparatus of claim 6 wherein said transmitting means sends said commands by modulating acoustic waves.

11. The apparatus of claim 1 wherein each said key is assigned a unique address and each said command comprises an address identifying which key is the intended recipient.

12. The apparatus of claim 1 wherein at least one of said commands comprises a broadcast symbol identifying all said keys as intended recipients.

13. The apparatus of claim 1 wherein at least one of said commands comprises a group symbol identifying more than one but fewer than all said keys as intended recipients.

14. The apparatus of claim 1 wherein said command includes a display image code from an available set of display image codes and said receiving means of each intended recipient of said command displays the corresponding said display image.

15. The apparatus of claim 1 wherein said receiving means for each said key stores a set of selected display images from an available set of display images and said commands intended for said key identify which said image should be displayed at a given time.

16. The apparatus of claim 15 wherein said display images stored in said key may be changed in accordance with information provided in said display commands.

17. The apparatus of claim 1 wherein said commands include instructions indicative of the format in which said information is to be displayed on said display elements.

18. The apparatus of claim 1 wherein said information for display comprise alphanumeric characters.

19. A key device for inclusion in a keyboard of the kind in which the keys display information based on commands sent from a transmitting means, each said command identifying which keys it is intended for, said key comprising
means for receiving each said command, and
means for determining whether said key is an intended recipient of said commands.

20. A key device for inclusion in a keyboard of the kind in which the keys display information based on commands sent from a transmitting means, said key comprising
a receiver coupled to a communications medium on which said commands are carried,
said medium not including an uninterrupted hard physical connection between said transmitting and receiving means.

7

21. A key of the kind that provides an electrical signal in response to a user's contact with said key, said key being adapted for use with a display device that generates a visible image, said key comprising
a translucent surface that is visible to said user and is spaced apart from said display device, and
a lens for focusing said image on said translucent surface for viewing.

22. A key of the kind that provides an electrical signal in response to a user's contact with said key, said key being adapted for use with an electro-optical display device that generates a visible image, said key comprising
a touch surface for activating said key, and
a display surface oriented at an angle to said touch surface for displaying said image.

23. The key of claim 21 further comprising a three-dimensional key body mounted for substantially vertical movement in response to the user's contact,
said display device having a stationary position relative to said key body,
said key body including a channel leading from said display to said translucent surface,
said lens being disposed in said channel.

24. The key of claim 23 wherein said key body comprises a top touch surface for contact by said user, and said display device is positioned beneath the bottom of said key.

25. The key of claim 21 wherein said display device is of the electro-optical type arranged for displaying characters.

26. The key to claim 21 wherein said key comprises a touch surface for activating said key and said translucent surface is oriented at an angle to said touch surface.

27. The key to claim 22 further comprising
a three-dimensional key body bearing said touch surface on its top and said display surface adjacent to, and at an oblique angle to, said touch surface.

28. The key to claim 22 wherein
said display device is spaced apart from said display surface,
said display surface comprises a translucent surface,
said key defines an optical path for projecting said optical image onto said translucent surface.

29. A keyboard comprising a plurality of keys each of the kind that provides an electrical signal in response to a user's contact with said key, each said key being adapted for use with an associated display device that generates a visible image, each said key comprising
a translucent surface that is visible to said user and is spaced apart from said display device, and
a lens for focusing said image on said translucent surface for viewing.

30. A keyboard comprising a plurality of keys each of the kind that provides an electrical signal in response to a user's contact with said key, each said key being adapted for use with an associated electro-optical display device that generates a visible image, each said key comprising
a touch surface for activating said key, and
a display surface oriented at an angle to said touch surface for displaying said image.

31. The keyboard of claim 29 or 30 wherein said keys are arranged in an array and said display devices are arranged in a corresponding array beneath said array of keys.

32. The keyboard of claim 31 wherein said keys comprise three-dimensional key bodies mounted to move vertically relative to said display devices.

33. The keyboard of claim 29 or 30 further comprising means for altering said visible images in response to user's contact with said keys.

8

FIG 1

FIG 2

# FIG 3

## FIG 4

| 52 | DESTINATION | INSTRUCTION | TERMINATOR |
|----|-------------|-------------|------------|

54

56

| 53 | ADDRESS | |

| 55 | BROADCAST | |

| 57 | GROUP | |

## FIG 5

DISPLAY

**DISPLAY CONTROLLER** — 36

- 68 CHARACTER TABLE
- 70 DISPLAY DRIVER
- 66 INSTRUCTION DECODER
- 65 BUFFER

TRIGGER

INSTRUCTIONS

**RECEIVER** — 38

- 64 GATE
- 62 DESTINATION DECODER
- 60 BUFFER

DISPLAY COMMANDS

## FIG 6

- 24 KEYS

DISPLAY COMMANDS

KEYPRESS INFORMATION

- 42 KEYBOARD MICROPROCESSOR

DISPLAY COMMANDS

KEYPRESS INFORMATION

- 80 SOFTWARE

FIG 7A

EDIT  CREATE  DELETE  SAVE

*94* *90*

FIG 7B

TAPE  DISK  REMOTE

*92* *90*

FIG 7C

DISK 1  DISK 2  DISK 3

*90*

FIG 8

44

CARRIER MODULATOR

100

CHANNEL

102

38

CARRIER DEMODULATOR

104

BINARY CODED DISPLAY COMMANDS

BINARY CODED DISPLAY COMMANDS

FIG 9

FIG 10

# FIG 11